Europäisches Patentamt

European Patent Office

Office européen des brevets

(11) Numéro de publication: **0 209 889**
**A1**

(12) ## DEMANDE DE BREVET EUROPEEN

(21) Numéro de dépôt: 86110046.9

(51) Int. Cl.4: **G01N 3/02** , G01N 3/30

(22) Date de dépôt: 22.07.86

(30) Priorité: 24.07.85 LU 86017

(43) Date de publication de la demande:
**28.01.87 Bulletin 87/05**

(84) Etats contractants désignés:
**BE DE FR GB IT LU NL**

(71) Demandeur: **COMMUNAUTE EUROPEENNE DE L'ENERGIE ATOMIQUE (EURATOM)**
**Bâtiment Jean Monnet Plateau du Kirchberg**
**Boîte Postale 1907**
**L-1019 Luxembourg(LU)**

(72) Inventeur: **Albertini, Carlo**
**Via dei Pini 17**
**I-21020 Ispra(IT)**
Inventeur: **Montagnani, Mario**
**Via G. Rossi 5**
**Bologna(IT)**
Inventeur: **Morini, Romano**
**Podere Auriga 1**
**Angera(IT)**
Inventeur: **Prosdocimi, Gianluigi**
**Via Bossi 15**
**Azzare(IT)**

(74) Mandataire: **Weinmiller, Jürgen**
**Lennéstrasse 9**
**D-8133 Feldafing(DE)**

(54) **Dispositif de fixation d'une barre de test en traction axiale.**

(57) L'invention se réfère à un dispositif de fixation d'une barre de test (1) en traction axiale, permettant de libérer brusquement la barre à l'aide d'un détonateur et s'appliquant à deux épaulements symétriques (3a, 3b) de la barre. Selon l'invention, le dispositif comporte deux bras (3a, 3b), qui sont articulés par une première extrémité sur deux paliers fixes (6a, 6b) de part et d'autre de la barre et s'appliquent par leurs extrémités libres contre ledit épaulement. Un boulon explosif (5), qui est disposé tangentiellement à ladite barre, réunit les extrémités libres des deux bras avant leur libération.

Fig.2

## Dispositif de fixation d'une barre de test en traction axiale

L'invention se réfère à un dispositif de fixation d'une barre de test en traction axiale, permettant de libérer brusquement la barre à l'aide d'un détonateur et s'appliquant à deux épaulements de la barre, ces épaulements étant symétriques par rapport à un plan incluant l'axe de la barre.

Dans un article paru dans le périodique "Institute of Physics Conf.", Ser. N° 21, pages 22 à 30, 1974, on décrit une technique de test de métaux à la rupture, surtout en vue de connaître le comportement accidentel d'une enceinte nucléaire. A cet effet, on accouple un échantillon du matériau à tester sous forme d'une barre d'une part à une grande masse et d'autre part à un générateur d'une impulsion de tension longitudinale. Ce générateur se compose d'un moyen de précontrainte et d'un moyen de fixation - relâchement, ces deux moyens s'appliquant aux deux extrémités d'une barre élastique qui constitue une prolongation de la barre de test et fait office d'un réservoir d'énergie.

Avant une opération de test on bloque les moyens de fixation qui se trouvent entre la barre de test et la barre élastique, et on soumet cette dernière par le moyen de précontrainte à une tension longitudinale calibrée. Puis on relâche brusquement les moyens de fixation, ce qui libère l'énergie stockée dans la barre élastique, cette énergie étant appliquée en tant qu'impulsion calibrée de tension à la barre de test.

La présente invention concerne en particulier ce moyen de fixation-relâchement et elle a pour but de concevoir un dispositif de fixation permettant de créer une impulsion de tension aussi raide que possible tout en évitant des oscillations ou des forces transversales qui pourraient gêner et falsifier le test. On connaît par ledit article un dispositif de fixation d'une barre, comportant un intermédaire fragile qui est serré contre une dent faisant partie de la barre. La libération de l'impulsion s'effectue lorsque la tension axiale dépasse une valeur de seuil à laquelle l'intermédiaire fragile casse.

Cependant ce dispositif ne répond pas complètement aux exigences citées ci-dessus. En particulier, l'excentricité de la dent induit des oscillations transversales qui se superposent à l'impulsion longitudinale et qui faisifient les mesures. En outre il est difficile, voire impossible, de synchroniser des appareils d'enregistrement tels qu'une caméra à l'impulsion ainsi générée, car le déclenchement de l'impulsion est aléatoire.

Un autre dispositif de fixation en traction longitudinale pour une barre de test est décrit dans la demande de brevet européen 79 301 353.3. Ce dispositif comporte deux boulons explosifs qui sont appliqués à deux épaulements symétriques de la barre et qui sont libérés simultanément par un détonateur électrique.

Ce dispositif souffre d'une certaine complexité nécessitant deux systèmes de détonation parfaitement synchronisés. En outre toute asymétrie, soit de l'attaque des boulons aux épaulements de la barre, soit de l'explosion des boulons, induit des flexions transversales et réduit la raideur de l'impulsion. Cette raideur sans aucune assymétrie du système peut être réduite aussi par des flexions transversales dues à la flexibilité de l'attaque des boulons.

L'invention a pour but d'éviter ces inconvénients et de proposer un dispositif selon le préambule de la revendication 1, se distinguant par sa simplicité de structure et de commande de déclenchement. Ce but est atteint selon l'invention par le dispositif tel qu'il est caractérisé dans la revendication 1.

L'invention sera décrite ci-après en détail à l'aide d'un exemple de réalisation et des dessins.

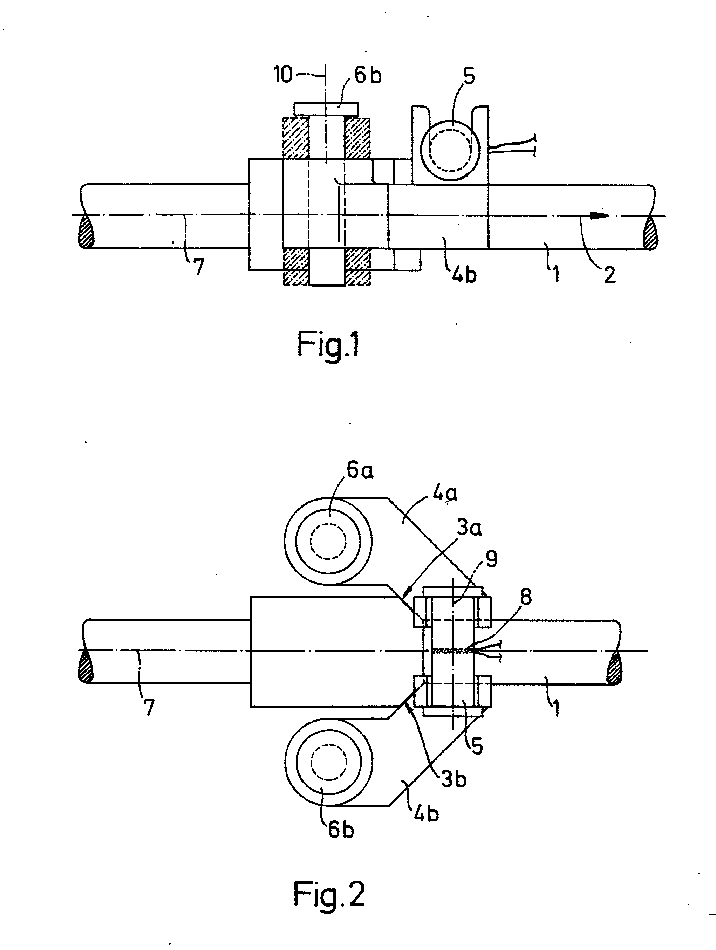

La fig. 1 montre une vue latérale d'un dispositif selon l'invention.

La fig. 2 représente le même dispositif selon une vue orthogonale à la présente.

Les figures montrent un morceau d'une barre élastique 1, qui est soumise par un moyen non représenté à une traction longitudinale selon une flèche 2. Cette traction est équilibrée par un dispositif de fixation qui est fixé sur un support non représenté et qui coopère avec deux épaulements symétriques 3a et 3b solidaires de la barre 1.

Le dispositif de fixation se compose de deux bras 4a et 4b et d'un boulon explosif 5, qui réunit les deux extrémités libres des bras alors que les autres extrémités sont articulées sur des boulons 6a et 6b solidaires du support.

L'angle entre l'axe 7 de la barre 1 et les deux épaulements 3a et 3b est choisi entre 120 et 150°, de préférence à 135°, de telle sorte que la traction exercée selon la flèche 2 sur la barre induit à travers ces épaulements une force de traction au boulon explosif 5 tendant à écarter les bras. Un détonateur électrique 8 est prévu à l'intérieur du boulon 5 pour déclencher en temps voulu la rupture du boulon explosif le long d'une ligne de rupture préétablie. Le boulon explosif est disposé tangentiellement à la barre, son axe 9 étant perpendiculaire à l'axe 7 de la barre et perpendiculaire également aux axes 10 des boulons 6a et 6b solidaires du support.

Lo-s d'un essai un échantillon est accouplé axialement à la barre 1 au-delà du dispositif de fixation par rapport au moyen de précontrainte - (flèche 2). La barre est maintenue par les bras 4a et 4b et le boulon explosif 5 de sorte que l'échantillon ne supporte pas des forces de traction. La précontrainte de la barre selon la flèche 2 est alors établie par un moyen approprié tel qu'une vis différentielle. Au moment opportun le détonateur électrique casse le boulon 5 et libère ainsi les deux bras qui s'écartent aussitôt. L'énergie de précontrainte emmagasinée dans la barre 1 est alors transmise sous forme d'une impulsion très raide à l'échantillon. A cause de la symétrie des boulons 6a et 6b, de la symétrie des épaulements 3a et 3b et de la symétrie des bras 4a et 4b, ce dispositif n'induit pratiquement aucune force transversale à la barre malgré la présence d'un seul boulon explosif qui est nécessairement asymétrique.

Le dispositif selon l'invention permet donc de générer une impulsion de traction pure d'une grande raideur et d'une reproductibilité remarquable.

**Revendications**

1. Dispositif de fixation d'une barre de test en traction axiale, permettant de libérer brusquement la barre à l'aide d'un détonateur et s'appliquant à deux épaulements de la barre, ces deux épaulements étant symétriques par rapport à un plan incluant l'axe de la barre, caractérisé en ce qu'il comporte deux bras (4a, 4b) articulés par une première extrémité sur deux paliers fixes (6a, 6b) de part et d'autre de la barre (1) et s'appliquant par leurs extrémités libres contre ledit épaulement (3a, 3b), de telle sorte que le plan de mouvement des bras est perpendiculaire audit plan de symétrie des épaulements et inclut l'axe de la barre, et en ce qu'un boulon explosif (5) réunit les deux extrémités libres des deux bras, ce boulon étant disposé tangentiellement à ladite barre (1).

2. Dispositif selon la revendication 1, caractérisé en ce que les épaulements (3a, 3b) font avec l'axe de la barre un angle entre 120 et 150°.

Fig.1

Fig.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | EP-A-0 007 740 (EURATOM)<br>* Page 4, lignes 14-23; figure 1 * | 1 | G 01 N   3/02<br>G 01 N   3/30 |
| | --- | | |
| A | GB-A-1 086 337 (C.E.A.)<br>* Page 2, lignes 64-95; page 3, lignes 40-62; figures 1,2 * | 1 | |
| | --- | | |
| A | FR-A-1 299 654 (RUGGIERI)<br>* En entier * | 1 | |
| | --- | | |
| A | US-A-3 012 810 (B.N. TENNEY)<br>* Colonne 3, ligne 55 - colonne 4, ligne 12; figures 2,3 * | 1 | |
| | ----- | | |

DOMAINES TECHNIQUES
RECHERCHES (Int. Cl.4)

G 01 N   3/00
F 42 B   3/00

Le présent rapport de recherche a été établi pour toutes les revendications

| Lieu de la recherche | Date d'achèvement de la recherche | Examinateur |
|---|---|---|
| LA HAYE | 05-11-1986 | ANTHONY R.G. |